# FASCICULE DE BREVET EUROPEEN

(11) **EP 1 552 431 B1**
(45) Date de publication et mention de la délivrance du brevet: **25.08.2010**
(21) Numéro de dépôt: 03763917.6
(22) Date de dépôt: 16.06.2003
(51) Int. Cl.: G06F 17/30, H04L 29/12

(54) **Procédé et terminal pour la sélection d'une adresse du serveur**
Verfahren und Endgerät zur Auswahl einer Serveradresse
Method and terminal for selecting a server address

(30) Priorité: 08.07.2002 FR 0208573
(43) Date de publication de la demande: 13.07.2005
(73) Titulaire: Microsoft Research & Development France S.A.S., 75014 Paris (FR)
(72) Inventeur: MAROT, Emmanuel, F-75004 Paris (FR); ANQUETIL, Gilles, Bellevue, WA98004 (US); BOTVINIK, Bruno, F-91700 Saint Geneviève des Bois (FR)
(74) Mandataire: Grünecker, Kinkeldey, Stockmair & Schwanhäusser Anwaltssozietät
(86) Numéro de dépôt international: PCT/FR2003/001816
(87) Numéro de publication internationale: WO 2004/008341

(56) Documents cités:
- EP-A- 0 987 868
- EP-A- 1 022 666
- EP-A- 1 126 683
- WO-A-01/82556
- WO-A-98/11744
- WO-A-99/19814
- GB-A- 2 365 162
- US-A- 5 895 471
- US-B1- 6 307 549

## Description

La présente invention se rapporte à un procédé, et à un terminal de télécommunications.

Un réseau de télécommunications permet à un utilisateur muni d'un terminal, connecté à ce réseau, d'accéder à des données mémorisées dans un serveur du réseau.

A cet effet le terminal transmet, via le réseau, une requête à ce serveur qui communique, en réponse, des données au terminal. Ces données transmises peuvent correspondre à des données requises - on dit alors que le terminal accède à des données ou à l'adresse de ces données- ou à des données non identifiées dans la requête, telles que des données présentant des services proposés par le serveur. Dans ce dernier cas, on dit que le terminal accède au serveur ou à l'adresse du serveur.

Pour permettre l'accès à un serveur, une requête doit indiquer un identifiant, ou adresse, de ce dernier afin que le réseau transmette cette requête jusqu'à ce serveur.

De façon analogue, pour accéder à des données, la requête doit indiquer l'adresse du serveur mémorisant ces données et un nom de fichier propre à ces données. On considère par la suite que, pour identifier ces données, le terminal transmet une adresse de données indiquant le fichier et le serveur considérés. Par ailleurs, lorsqu'un terminal reçoit des données d'un serveur, on dit que le terminal accède au site de ce serveur relatif à ces données.

Lorsqu'un terminal transmet une adresse de serveur, cette dernière doit être codée conformément au protocole de communication utilisé par le réseau. Par exemple, lorsqu'un terminal désire accéder à un serveur du réseau Internet, l'adresse du serveur requis doit être spécifiée suivant le protocole Hypertext Transfer Protocol (HTTP) propre au réseau Internet. Une telle adresse se présente sous une forme telle que: http://www.siteweb.com.

Suivant un autre exemple, lorsque le terminal est un téléphone portable relié à un réseau de téléphonie mobile tel que le réseau WAP (Wireless Access Protocol), une adresse de serveur peut se présenter comme : http://wap.siteweb.com.

Il apparaît que les adresses de serveurs, conformément à un protocole de communications, sont complexes, longues et ressemblantes. De ce fait, lorsque ces adresses sont saisies par l'utilisateur d'un terminal pour émettre une requête, des erreurs de saisie se produisent, notamment lorsque cette saisie est effectuée au moyen d'un clavier contraint associant plusieurs éléments à une même touche, tel que le clavier d'un téléphone portable décrit ultérieurement.

Lorsque l'on considère des adresses de données conformes à un protocole de communication, ces dernières présentent les mêmes inconvénients que les adresses de serveur, c'est-à-dire qu'elles sont généralement complexes, longues et ressemblantes.

Ainsi, en considérant que le serveur WAP défini par l'adresse http://wap.siteweb.com comprend des données relatives à la situation météorologique en France, cette adresse de données peut avoir une forme telle que: http://wap.siteweb.com/meteo/index.asp?region=france.

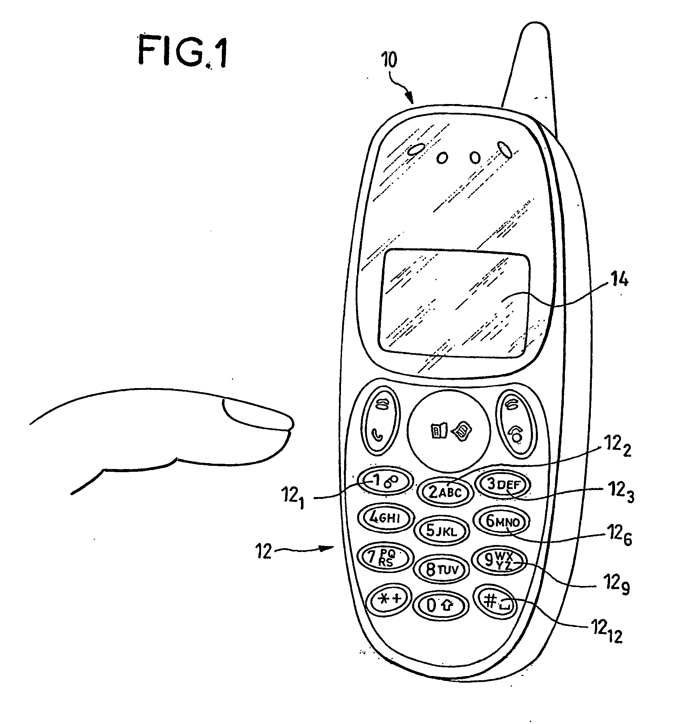

Par conséquent, des erreurs de saisie d'adresses de données se produisent de façon analogue aux erreurs de saisie d'adresses de serveur, notamment lorsque ces dernières sont saisies à l'aide d'un clavier contraint, tel que le clavier d'un téléphone portable, comme décrit ci-dessous à l'aide de la figure 1.

Sur cette figure 1 est représenté un téléphone mobile 10 comprenant un clavier 12 de dimensions limitées par la taille réduite du téléphone 10. De fait, les touches 12₁, 12₂, ...12₁₂ permettant de saisir les éléments, tels que des signes, des chiffres ou des lettres, d'une adresse sont particulièrement proches les unes des autres et de faibles dimensions, ce qui provoque des erreurs de saisie lorsque l'utilisateur appuie involontairement sur une touche.

Par ailleurs, le terminal 10 étant équipé d'un clavier contraint, une seule touche de ce clavier permet de saisir diverses lettres, symboles et chiffres. Ainsi, le chiffre 9 et les lettres w, x, y et z sont associés à une même touche 12₉, chacun de ces éléments pouvant être saisi en fonction du nombre d'appuis effectués de façon consécutive et dans un délai déterminé sur cette touche 12₉. Par exemple, la lettre w est saisie en appuyant deux fois consécutives sur la touche 12₉ tandis que trois appuis consécutifs sur cette touche 12₉ saisissent la lettre x.

Dès lors, des erreurs de saisies sont provoquées par ces contraintes de répétition et de délai lors de la saisie d'un élément. Par exemple, la lettre x est saisie à la place de la lettre w lorsque l'utilisateur du terminal appuie une fois de plus par mégarde sur la touche 12₉.

De plus, lorsque des erreurs de saisies se produisent, ces dernières sont difficiles à détecter malgré l'affichage des éléments saisis sur l'écran 14 du terminal du fait des faibles dimensions d'affichages des éléments saisis sur cet écran 14.

Par ailleurs, à la suite d'une erreur de saisie, le terminal émet une requête vis-à-vis d'une adresse inexistante ou erronée. Par exemple, en considérant l'erreur de saisie précédemment indiquée, l'adresse http://xap.siteweb.com est saisie à la place de l'adresse http://wap.siteweb.com. Dans ces cas, la communication entre le terminal et le serveur désiré par l'utilisateur ne peut pas être établie.

En cas d'erreur dans la saisie d'une adresse de serveur ou de données, l'utilisateur d'un terminal doit déceler et corriger cette erreur manuellement. En d'autres termes, l'adresse erronée ne peut pas être automatiquement corrigée par le terminal.

Par ailleurs, lorsqu'un utilisateur ne réussit pas à accéder à un serveur ou à des données suite à une erreur de saisie, il attribue fréquemment cet échec à un problème de connexion, tel qu'une surcharge du réseau, et abandonne toute tentative de connexion au serveur.

Il est aussi possible pour un utilisateur d'accéder à un serveur ou à des données à travers des serveurs (ou moteurs) de recherche destinés à indiquer les adresses de serveur ou de données correspondant à des mots clefs.

Toutefois, de telles recherches génèrent de nombreux résultats, plus ou moins pertinents, dont l'affichage nécessite de nombreuses pages ou écrans de présentation, notamment lorsque l'écran utilisé est un écran de faibles dimensions tel qu'un écran 14 de téléphone portable 10.

La lecture de ces informations est donc fastidieuse et requiert des délais généralement trop importants pour l'utilisateur du terminal qui abandonne sa recherche.

Selon un autre procédé, on détermine l'adresse d'un serveur ou de données en procédant au moyen d'une arborescence indiquant la nature et/ou la fonction du serveur recherché.

Ce procédé présente l'inconvénient de requérir une arborescence généralement longue et importante dont l'affichage est insatisfaisant sur des écrans de taille réduite tels que des écrans de téléphone portable.

Finalement, suivant un dernier procédé, l'utilisateur du terminal peut mémoriser des adresses de serveur dans une mémoire spécifique du terminal telle qu'un agenda ou un répertoire dit de favoris.

Un tel procédé présente les inconvénients de ne pouvoir être utilisé que pour des adresses auxquelles l'utilisateur a déjà accédé, et mis en mémoire, et d'être limité par la capacité de stockage du terminal.

Selon un autre procédé décrit dans WO 01/82556, un serveur de navigation propose une ou plusieurs adresses via le terminal suivant une saisie d'un fragment de code par un utilisateur sur un terminal. Ensuite, l'utilisateur peut choisir unes des proposition pour accéder à l'adresse correspondante.

Il convient de signaler que les procédés décrits ci-dessus d'accès à un serveur ou à des données présentent l'inconvénient de ne pas permettre à l'utilisateur d'un terminal d'utiliser une interface commune pour accéder à différents serveurs ou différentes données. En d'autres termes, l'utilisateur doit s'adapter aux spécificités de fonctionnement et/ou de présentation des différents types d'accès, par exemple différentes interfaces de serveurs de recherche, ce qui tend à rendre l'accès à un serveur ou à des données une opération longue, et donc coûteuse, et moins performante que si l'utilisateur effectuait la majorité de ses accès avec une unique interface.

La présente invention remédie à au moins un des inconvénients précédemment mentionnés. Elle concerne un procédé de communication entre un terminal et un serveur d'un réseau de communication, un serveur ou des données, d'un serveur étant identifiés par une adresse, selon la revendication 1.

L'utilisation d'un tel procédé, qui s'effectue pendant une communication, présente de nombreux avantages. Ainsi, il ne nécessite pas la saisie complète de l'adresse d'un serveur ou de données, longue et complexe comme précédemment décrit, pour accéder à ce serveur ou à ces données.

De fait, l'utilisateur peut choisir un code affiché dès qu'il effectue une courte saisie, ce code affiché étant par exemple descriptif d'un service recherché. Le code choisi est ensuite transmis automatiquement à un serveur de routage qui identifie une adresse associée à ce code et transmet cette dernière au terminal qui accède alors automatiquement au serveur ou aux données correspondant à cette adresse.

Par exemple, on peut considérer qu'un code "météo" correspond, dans la base d'un serveur de routage, à l'adresse http://www.meteorologie.com d'un serveur fournissant un service météorologique, et que, par ailleurs, un code "météo" est mémorisé dans la base de codes du terminal. Dès lors, la simple saisie des premières lettres "mét" du code "météo" peut entraîner l'affichage du code "météo", lorsque, conformément à une réalisation de l'invention, les premiers paramètres de sélection comprennent la similitude entre les éléments saisis et les éléments des codes mémorisés.

Lorsque le code "météo" affiché est sélectionné par l'utilisateur du terminal, le terminal transmet au serveur de routage ce code "météo" qui, identifiant l'adresse http://www.meteorologie.com comme l'adresse associée à ce code, transmet au terminal cette adresse http://www.meteorologie.com afin que ce dernier accède à ce serveur de météorologie.

Ainsi, l'utilisateur accède à un serveur en saisissant trois lettres "m", "e" et "t", puis en choisissant un code proposé, ce qui correspond à un nombre d'opérations inférieur à la saisie de l'adresse http://www.meteorologie.com du serveur.

De façon analogue, le procédé s'applique à l'accès à des données. Ainsi, on peut considérer que le code "météoFr" correspond, dans la base du serveur de routage, à l'adresse http://www.meteorologie.com/index.asp?region=france de données météorologiques propres à la France, un code "météoFr" étant mémorisé dans la base de codes du terminal. Dès lors, la simple saisie de "met" entraîne l'affichage du code "météo" et du code "météoFr" qui peut être sélectionné par l'utilisateur.

S'il effectue cette sélection, le terminal transmet au serveur de routage le code "météoFr", le serveur de routage communiquant à son tour l'adresse associée à ce code, à savoir: http://www.meteorologie.com/index.asp?region=france.

Il convient de signaler que les codes affichés, mémorisés dans le terminal, peuvent avoir été transmis par le serveur à partir de la saisie.

Dans une réalisation, on transmet, à partir du serveur de routage, une commande modifiant la base de codes du terminal et/ou modifiant une adresse du serveur de routage mémorisée par le terminal pour transmettre un code au serveur de routage.

Dans ce cas, selon une réalisation, la modification de la base de codes du terminal comprend au moins une des opérations suivantes: la mémorisation d'un nouveau code, l'élimination d'un code, la création, la modification ou la suppression d'un groupe ou dictionnaire de codes, l'attribution d'une priorité d'affichage entre des codes, par exemple en fonction du dictionnaire dont est issu ce code.

Ce mode de réalisation permet de mettre à jour les codes mémorisés dans le terminal en fonction, par exemple, de leur intérêt. Ainsi, si une oeuvre cinématographique intitulée Film est en promotion, un code "Film" peut être transmis par le serveur de routage de façon à ce qu'il soit mémorisé dans le terminal, ce code étant associé à une adresse de données ou de serveur relatifs à cette oeuvre dans la base d'adresse du serveur de routage, dirigeant les terminaux vers ces données ou ce serveur lorsque le code "Film" est transmis par un terminal.

Par la suite, si cette oeuvre cinématographique est abandonnée, ce même code "Film" peut être supprimé des bases de codes des terminaux et de la base d'adresse du serveur de routage de façon à libérer des ressources de mémorisation.

Selon un deuxième exemple, si le terminal accède au serveur météorologique précédemment décrit, le serveur de routage peut transmettre un dictionnaire de codes propres à ce serveur, comprenant par exemple les codes "Etats-Unis" et "France" relatifs aux données météorologiques propres à un de ces pays. Dès lors, si l'utilisateur saisit "Fra", le code "France" est affichée pour que l'utilisateur puisse le sélectionner et accéder aux données associées à ce code "France", identiques aux données associées au code "météoFr".

Ainsi, l'invention permet d'accéder à des données identiques suivant différents codes.

Les codes utilisés par l'invention ne sont pas contraints par un protocole de communication. En effet, ils peuvent être arbitrairement définis par des utilisateurs du procédé tels qu'un opérateur de télécommunications ou un fournisseur d'accès.

De ce fait, un procédé conforme à l'invention tend à limiter les erreurs de saisie puisque les codes peuvent être choisis de façon à être relativement courts, simples, distincts les uns des autres et descriptif d'un service ou d'une prestation.

Par ailleurs, il convient de signaler que, grâce à un procédé conforme à l'invention, un terminal présente une interface particulièrement conviviale pour un utilisateur. Ainsi, en affichant des codes similaires à la saisie effectuée par l'utilisateur, ce dernier peut accéder au serveur requis malgré une erreur de saisie. Par exemple, si l'utilisateur saisit "mdt" au lieu de "met", le code "météo" similaire à la saisie sera affiché pour tenir compte d'une éventuelle erreur de saisie.

De plus, cette même interface peut être utilisée pour accéder à différents serveurs ou différentes données. En d'autres termes, l'utilisateur peut utiliser une interface simple et familière pour divers accès.

En choisissant un code proposé par le terminal, l'utilisateur est assuré que sa requête correspond à un service accessible, c'est-à-dire que la communication effectuée par son terminal correspond à un serveur ou à des données disponibles sur le réseau.

Finalement, un code utilisé dans un procédé conforme à l'invention requiert une capacité de mémoire inférieure à une adresse de serveur de telle sorte que, en mémorisant des codes, le terminal dispose de plus de mémoires qu'en mémorisant des adresses complètes de serveurs ou de données dans un agenda ou dans un fichier de favoris.

De façon corollaire, à taille de mémoire constante, un utilisateur dispose généralement de plus de codes disponibles dans la mémoire de son terminal que d'adresses de serveur ou de données.

Dans une réalisation, on transmet la commande de modification lorsque le serveur communique une adresse au terminal.

Selon une réalisation, on considère la similitude entre la saisie et un code mémorisé comme un premier paramètre tel que les codes affichés sont les codes les plus similaires à la saisie.

Dans ce cas, on peut déterminer la similitude entre la saisie et un code en attribuant un coût pour chaque correction d'un élément de la saisie permettant d'obtenir un élément du code, par exemple en substituant ou en supprimant un élément de la saisie ou en insérant un élément dans la saisie, la similitude entre une saisie et un code étant d'autant plus élevée que la somme des coûts pour obtenir un code en corrigeant une saisie est faible.

Selon l'invention, on sélectionne et on affiche des codes au fur et à mesure de la saisie en considérant des premiers éléments saisis avec des premiers éléments de codes de la base.

Selon une réalisation, on considère la saisie comme un code qui est transmis au serveur de routage.

Dans une réalisation, on groupe les codes du terminal en dictionnaires, chaque dictionnaire étant propre à une catégorie de codes telle que des codes relatifs à des accès réalisés par le terminal ou à un répertoire de l'utilisateur, d'un prestataire de services, d'un opérateur de télécommunications, d'un fournisseur d'accès au réseau ou d'un opérateur du serveur de routage.

Dans une réalisation, on considère le contexte de la saisie comme un premier paramètre de sélection fixant une priorité de sélection entre les codes issus de différents dictionnaires, ce contexte étant relatif à au moins un des paramètres suivants: des données affichées par le terminal, un accès en cours, une communication en cours, une localisation géographique du terminal, un opérateur téléphonique transmettant les communications, un fournisseur d'accès au réseau, un historique des accès réalisés, des sites indiqués en favoris, la nature du terminal, une langue de fonctionnement du terminal.

Ainsi, lorsque par exemple un terminal est en cours d'accès à un serveur fournissant des informations cinématographiques, ce serveur peut requérir des informations propres à des localisations ou à des films au moyen de champs de saisies distincts, affichés sur l'écran du terminal. Dès lors, en fonction du champ de saisie utilisé pour transmettre des informations, le contexte diffère et des codes relatifs à des localisations ou relatifs à des films seront prioritairement sélectionnés.

Dans une réalisation, on transmet au moins un paramètre du contexte de la saisie au serveur de routage lors de la transmission d'un code.

Selon une réalisation, des adresses ou des codes associés à des codes étant groupées par dictionnaires propres à une catégorie d'adresse, on utilise un paramètre du contexte de la saisie et/ou un identifiant de l'utilisateur comme un deuxième paramètre de sélection attribuant une priorité à une adresse issue d'un premier dictionnaire vis-à-vis d'une adresse issue d'un deuxième dictionnaire ou à un code issu d'un premier dictionnaire vis-à-vis d'un code issu d'un deuxième dictionnaire.

Dans une réalisation, on utilise des serveurs intermédiaires comportant une base d'adresse issue de la base du serveur de routage de façon à recevoir le code émis par le terminal pour transmettre à ce terminal une adresse ou des codes, pour transmettre le code reçu au serveur de routage ou pour transmettre des commandes modifiant la base de codes du terminal.

L'invention concerne aussi un terminal de communication selon la revendication 12 à des serveurs ou à des données de ces serveurs via un réseau de communication au moyen d'une adresse conforme à un protocole de communication.

Selon une réalisation, le terminal comprend des moyens pour recevoir du serveur de routage une commande modifiant sa base de codes et/ou modifiant une adresse du serveur de routage.

Dans une réalisation, le terminal comprend des moyens pour modifier sa base de codes en effectuent au moins une des opérations suivantes: la mémorisation d'un nouveau code, l'élimination d'un code, la crémation, la modification ou la suppression d'un groupe ou dictionnaire de codes, l'attribution d'une priorité d'affichage entre des codes, par exemple en fonction du dictionnaire dont est issu ce code.

Selon une réalisation, le terminal comprend des moyens pour considérer la similitude entre la saisie et un code mémorisé comme un premier paramètre de sélection des codes affichés.

Dans une réalisation, le terminal comprend des moyens pour déterminer la similitude entre la saisie et un code en attribuant un coût pour chaque correction d'un élément de la saisie permettant d'obtenir un élément du code, par exemple en substituant ou en supprimant un élément de la saisie ou en insérant un élément dans la saisie, la similitude entre une saisie et un code étant alors d'autant plus élevée que la somme des coûts pour obtenir un code en corrigeant une saisie est faible.

Dans une réalisation, le terminal comprend des moyens pour diviser la base de codes en sous bases, ou dictionnaires propres à une catégorie de codes telle que des codes relatifs aux accès réalisés par le terminal ou à un répertoire de l'utilisateur, d'un prestataire de services, d'un opérateur de télécommunications, d'un fournisseur d'accès au réseau ou d'un opérateur du serveur de routage.

Selon une réalisation, le terminal comprend des moyens pour considérer le contexte de la saisie comme un premier paramètre de sélection fixant une priorité de sélection entre les codes de différents dictionnaires, ce contexte étant relatif à au moins un des paramètres suivants: des données affichées par le terminal, un accès en cours, une communication en cours, une localisation géographique du terminal, un opérateur téléphonique transmettant les communications, un fournisseur d'accès au réseau, un historique des sites visités, des sites indiqués en favoris, un fabriquant du terminal, une langue de saisie.

Selon l'invention, le terminal comprend des moyens pour sélectionner et afficher des codes au fur et à mesure de la saisie en fonction de la similitude entre les premiers éléments saisis et des premiers éléments de codes de la base.

D'autres caractéristiques et avantages de l'invention apparaîtront avec la description de certains de ses modes de réalisation effectuée ci-dessous, à titre non limitatif, en se référant aux dessins ci-annexés sur lesquels :
La figure 1, déjà décrite, représente un téléphone portable muni d'un clavier contraient,
La figure 2 est un schéma d'un réseau comprenant des terminaux et des serveurs conformes à l'invention,
La figure 3 est un diagramme représentatif de l'utilisation des premiers et des deuxièmes paramètres de sélection, et
Les figures 4, 5 et 6 représentent des applications d'un procédé conforme à l'invention.

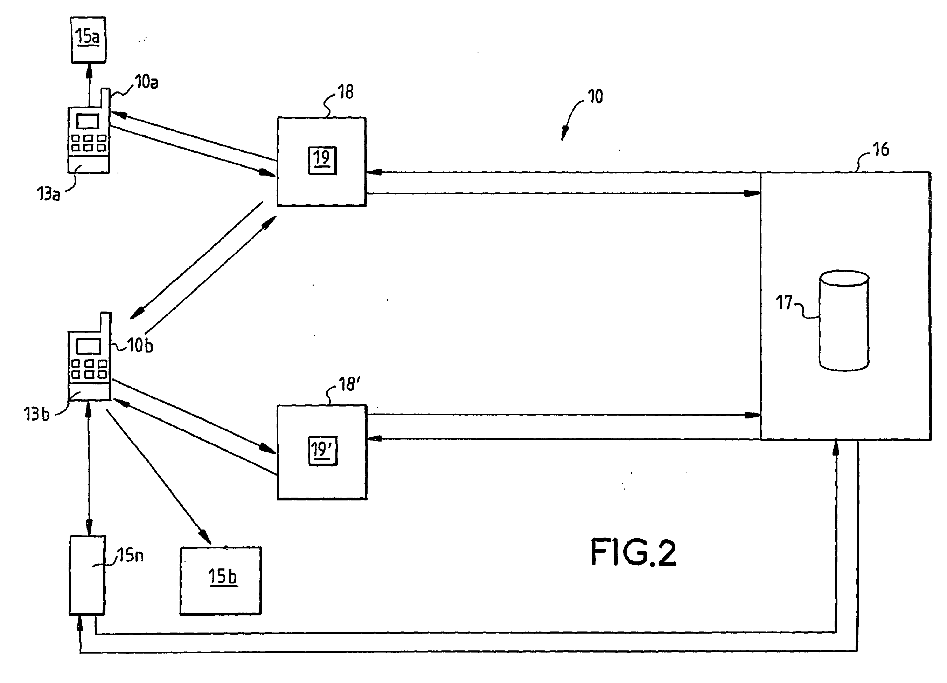

Sur la figure 2 est représenté un réseau 10 de télécommunications comprenant un terminal 10a et un serveur 15a auquel désire accéder l'utilisateur du terminal 10a selon un procédé conforme à l'invention.

A cet effet, le terminal 10a comprend des moyens 13a pour que son utilisateur effectue une saisie et des moyens pour que des codes, sélectionnés suivant des premiers paramètres décrits ultérieurement, s'affichent sur l'écran du terminal de façon à ce que l'utilisateur du terminal choisisse un des codes affichés.

Ces moyens de saisie et d'affichage peuvent être sollicités par l'utilisateur du terminal selon différentes opérations telles que l'appui d'une touche ou d'une séquence de touches spécifiques, la sélection d'une application dans un menu du terminal, l'activation d'une balise amenant le terminal à accéder à une adresse donnée ou un déclenchement automatique suite à l'accès à une adresse prédéterminée.

Pour accéder à une adresse du réseau, le terminal comprend des moyens d'accès, dénommés navigateur, qui permettent la transmission et la réception de données via le réseau. Par la suite, lorsque le navigateur reçoit des données d'un serveur, on dit que le navigateur accède au site relatif à ces données.

En outre, le navigateur peut recevoir ou transmettre aux moyens 13a des données pour que, par exemple, ces derniers modifient la base de codes conformément à une commande transmise par le serveur 16 décrite ultérieurement ou déclenchent l'affichage de codes transmis par le serveur 16.

Inversement, les moyens 13a de saisie peuvent transmettre au navigateur un code et l'adresse d'un serveur 16 de routage pour que, dans un premier temps, le terminal transmette un code au serveur 16 de routage et que, dans un deuxième temps, ce dernier transmette au navigateur une adresse de façon à ce que le terminal 10a accède à cette adresse.

A cet effet, lorsqu'un des codes affichés est choisi par l'utilisateur et que le terminal 10a transmet ce code au serveur 16 de routage, ce dernier utilise une base 17 de données associant des codes à des adresses, conformes au protocole de communication du réseau 10, ou à d'autres codes comme décrit ultérieurement.

Après avoir identifié l'adresse d'un serveur 15a comme l'adresse associée au code reçu au moyen de deuxièmes paramètres décrits ultérieurement, le serveur 16 de routage transmet cette adresse au terminal 10a de façon à ce que ce dernier accède automatiquement au serveur 15a.

Comme représenté sur la figure 2, les communications entre le terminal 10a et le serveur 16 peuvent être relayées par un serveur 18 intermédiaire de routage.

L'utilisation du serveur 18 intermédiaire permet d'effectuer une première analyse du code transmis par le terminal 10a vis-à-vis d'une base 19 de données issues de la base 17 et correspondant, par exemple aux adresses les plus couramment demandées.

Ainsi, si une adresse de serveur ou de données est identifiée par le serveur 18 intermédiaire au moyen de sa base 19, il transmet cette adresse au terminal 10a sans s'adresser au serveur 16. De fait, l'utilisation de serveurs 18 intermédiaires permet de limiter la charge de travail du serveur 16 de routage.

Dans une réalisation, la base 19' d'un autre serveur 18' intermédiaire est distincte de la base 19 du serveur 18, chacune de ces bases comportant, par exemple, des codes propres à des opérateurs téléphoniques distincts.

De plus, on pallie ainsi à une éventuelle panne de l'un de ses serveurs en utilisant un deuxième serveur intermédiaire. Par exemple, en considérant un terminal 10b relié à un serveur 18' intermédiaire, une éventuelle panne de ce serveur 18' peut être détectée par le terminal 10b de telle sorte que ce dernier transmet sa requête au serveur 18.

En relation avec le terminal 10b est représentée une variante de l'invention telle que l'utilisateur ne choisit aucun code affiché de telle sorte que la saisie effectuée est considérée comme le code devant être transmis au serveur 16 de routage.

Il est alors possible que le serveur 16 identifie une adresse associée à ce code auquel cas le terminal est dirigé vers cette adresse, ou que le serveur 16 ne puisse pas identifier une unique adresse associée à ce code.

Dans ce dernier cas, selon une réalisation, le serveur 16 de routage transmet au terminal 10b une adresse de serveur 15ᵣ de recherche tel que, le terminal transmettant automatiquement le code considéré à ce serveur 15ᵣ de recherche, ce dernier effectue automatiquement une recherche d'adresses de serveur ou de données correspondant à cette saisie puis transmet les résultats de la recherche au terminal 10b qui affiche ces résultats afin que l'utilisateur accède à une des adresses affichées.

Le terminal 10b comprend alors des moyens pour mémoriser l'adresse choisie par l'utilisateur et transmettre cette adresse et le code recherché au serveur 16 qui peut mettre à jour sa base 17 en associant le code requis à l'adresse choisie par l'utilisateur du terminal 10b.

Selon une autre réalisation, le serveur 16 comprend des moyens pour que, recevant un code du terminal 10b pour lequel il ne parvient pas à identifier une adresse associée, il transmette ce code au serveur 15ᵣ de recherche qui, en réponse, lui transmet les réponses de la recherche effectuée par rapport à ce code.

Ces réponses peuvent alors être transmises au terminal 10b sous la forme de codes générés à partir des résultats de la recherche, les adresses associées à ces codes étant mémorisées dans la base 17. Par la suite, l'utilisateur du terminal sélectionne un de ces codes qui est transmis au serveur 16 pour que ce dernier transmette au terminal 10a l'adresse associée au code choisi.

Dans une variante, les réponses de la recherche sont transmises au terminal 10a pour que son utilisateur sélectionne une de ces réponses, le terminal accédant à l'adresse associée à cette réponse, dans un premier temps, et communiquant au serveur l'adresse accédée et la code associé au serveur 16 dans un deuxième temps pour mettre à jour ce dernier.

Il convient de signaler que, lors d'une transmission au serveur 16 de routage, un terminal transmet un identifiant, par exemple pour contrôler l'accès du terminal à des services payants. De plus, le terminal transmet au moins un paramètre, décrit ultérieurement, permettant au serveur 16 d'identifier une adresse associée au code transmis.

Des codes mémorisés dans la base 17 du serveur 16, associant des adresses à ces codes, doivent être mémorisés dans la base de codes des terminaux 10a et 10b.

Pour cela, dans un premier temps, cette base de codes est chargée à partir de codes mémorisés par le serveur 16 de routage lors de la première utilisation du procédé par le terminal. Selon une variante, cette base de codes est mémorisée dans le terminal préalablement à sa vente.

Par la suite, lorsqu'un terminal est muni d'une première base de codes, cette dernière est modifiée à partir du serveur 16 au cours d'une communication entre le serveur 16 de routage et ce terminal, par exemple suite à une requête de ce dernier, de façon à effectuer des mises à jour de la base de codes sans effectuer des communications spécifiques.

Les modifications de la base de codes d'un terminal peuvent être commandées au serveur 16 de routage pour mettre à jour des codes ou lors de l'activation d'une balise de navigation, déclenchant l'accès du terminal à une adresse, comme décrit ci-dessous en supposant que le serveur 15a est un serveur relatif à des services cinématographiques.

Dans cet exemple, le serveur 15a peut transmettre une balise de navigation au terminal 10a telle que ce dernier établit une communication avec le serveur 16 de routage de façon à recevoir des codes, propres au prestataire A de services commandant le serveur 15a, tels que "horaires", "films" ou "animations".

De fait, chacun de ces codes "horaires", "films" ou "animations" est associé à des données spécifiques du serveur 15a, les adresses de ces données étant mémorisées dans la base 17 du serveur 16.

Dès lors, lorsque l'utilisateur du terminal 10a effectue une saisie pour connaître les services proposés par l'opérateur du serveur 15a, des codes propres au prestataire A sont disponibles dans la base de codes du terminal 10a et affichés en fonction, entre autres paramètres, de la saisie et de la similitude entre la saisie et chaque code mémorisé.

La similitude entre la saisie et un code est déterminée en calculant un coût pour chaque correction d'un élément de la saisie permettant d'obtenir un élément du code, par exemple en substituant ou en supprimant un élément de la saisie ou en insérant un élément dans la saisie, la similitude entre une saisie et un code étant d'autant plus élevée que la somme des coûts pour égaler un code à la saisie est faible.

Par ailleurs, dans cette réalisation, on pondère le coût d'une correction en fonction des éléments communs à une touche du terminal et/ou en fonction de la distance séparant les touches du terminal relatives à l'élément saisi et à l'élément correspondant du code.

La base 17 d'adresses du serveur 16 peut être utilisée par différents utilisateurs, tels que des opérateurs téléphoniques, tout en permettant à ces utilisateurs l'utilisation de codes propres à leurs services.

En d'autres termes, le serveur 16 permet de fournir une base d'adresses communes à différents opérateurs, l'accès à cette base étant personnalisé en fonction des codes propres à chaque opérateur, fournisseur d'accès ou fournisseur de contenu.

Une telle configuration présente l'avantage de permettre à ces opérateurs de disposer d'adresses communes, comprenant l'ensemble des adresses de serveur ou de données utilisées par des opérateurs.

Inversement, dans une réalisation de l'invention, deux opérateurs A et B distincts disposent de leur propre base d'adresses dans le serveur 16. Cette réalisation présente l'avantage de permettre aux opérateurs du serveur de routage de disposer de bases propres utilisant des codes et/ou des adresses spécifiques à chaque opérateur.

Il apparaît qu'un code transmis par le terminal pourrait être associé à différentes adresses dans la base 17. On prévoit alors que le serveur 16 communique au terminal différents codes, associés au code transmis et relatifs à ces adresses, l'utilisateur choisissant alors un de ces codes qui, transmis au serveur de routage, permet à ce dernier de communiquer une adresse au terminal.

Toutefois, de façon à limiter le nombre d'adresses identifiées, la base 17 est composée de sous bases pour que, au moyen de deuxièmes paramètres transmis par le terminal, le nombre de sous bases utilisées pour déterminer la ou les adresse(s) associée(s) à un code soit limité, réduisant en conséquence le nombre d'adresses pouvant être identifiées.

De façon analogue, la base de codes du terminal 10a ou 10b est composée de groupes ou dictionnaires de codes tels que, en fonction de premiers paramètres, un nombre limité de dictionnaires est utilisé pour sélectionner les codes devant être affichés.

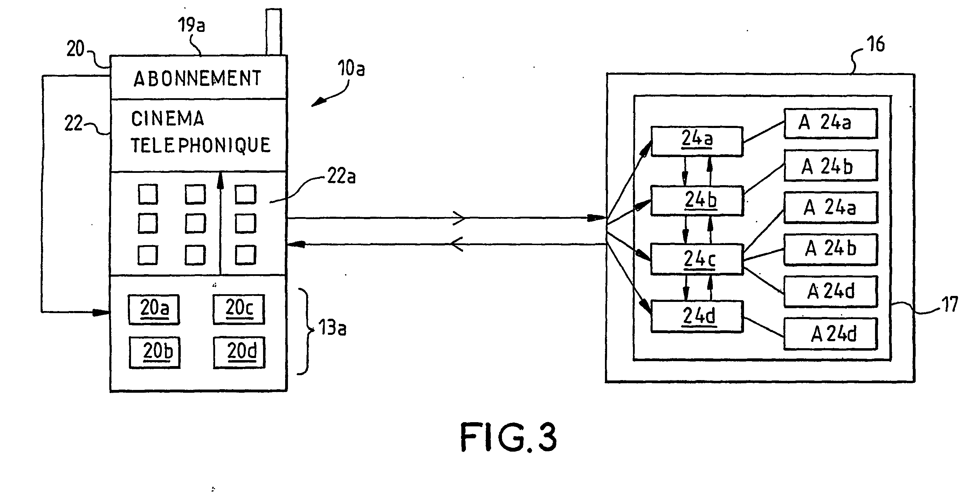

En outre, ces paramètres peuvent être utilisés pour déterminer un ordre d'affichage de codes sélectionnés lors d'une saisie ou transmis par le serveur, comme décrit ci-dessous à l'aide de la figure 3 qui représente le fonctionnement de ces paramètres de sélection par le serveur 16 de routage et par le terminal 10a de la figure 2.

Des sous-bases 24ₐ, 24_{b}, 24_{c} et 24ₐ de la base 17 sont représentées dans le serveur 16, la sous-base 24ₐ étant relative à des adresses propres à un opérateur A, la sous-base 24_{b} étant relative à des adresses propres à un opérateur B, la sous-base 24_{c} étant relative à une langue et la sous-base 24ₐ étant relative au serveur 15a de services cinématographiques.

L'opérateur A associe au code "Abonnement", transmis par le terminal 10a, une adresse A₂₄ₐ de données présentant une offre d'abonnement propre à cet opérateur. De façon analogue, l'opérateur B de communication associe au code "Abonnement" une adresse A_{24b} de données présentant une offre d'abonnement propre à cet opérateur B.

La sous-base 24_{c}, propre à l'utilisation d'une langue donnée, identifie trois adresses A₂₄ₐ, A_{24b} et A_{24d}, cette dernière étant relative à un abonnement aux services cinématographiques du serveur 15a et étant aussi identifiée dans la sous-base 24_{d}.

Lors de la transmission du code "Abonnement", le terminal transmet également des informations relatives à l'identité de l'utilisateur et au contexte de la saisie, comme par exemple la nature de l'opérateur téléphonique et/ou du fournisseur d'accès au réseau, la localisation du terminal, une langue d'utilisation, la nature du terminal, un accès en cours du terminal.

Ces informations sont alors utilisées comme deuxièmes paramètres de sélection pour déterminer l'adresse A₂₄ₐ, A_{24b} ou A_{24d} devant être sélectionnée et transmise au terminal. Ainsi, si l'opérateur A transmet le code "Abonnement" émis par le terminal 10ₐ, la sous-base 24_{b} n'est pas requise et seule les adresses A₂₄ₐ et et A_{24d} sont sélectionnées par le serveur 16.

Par la suite, le serveur 16 peut considérer qu'un accès en cours est un paramètre exclusif, de telle sorte que seul le dictionnaire 24d est utilisé, l'adresse A_{24d}, correspondant à un accès en cours au serveur 15a, étant transmise au terminal 10a.

Inversement, si la nature de l'opérateur transmettant les communications est un paramètre exclusif, seul le dictionnaire 24a est utilisé et l'adresse A₂₄ₐ est transmise au terminal 10a.

En d'autres termes, dans chacun de ces deux derniers cas, une unique sous base d'adresses est considérée en fonction de deuxième(s) paramètre(s).

Dans un autre cas, un accès en cours est un paramètre prioritaire, mais non exclusif, de telle sorte que la nature de l'opérateur transmettant les communications est aussi considérée et que les deux dictionnaires 24a et 24d sont utilisés par le serveur 16.

De plus, il convient de signaler que le serveur 16 comprend des moyens pour associer un code de sa base 17 à un (ou plusieurs) code(s), par exemple suivant des critères lexicaux ou thématiques. Par exemple, des codes "Téléphonique" et "Cinéma", respectivement associés aux adresses A₂₄ₐ et A₂₄ₐ, peuvent être associés au code "Abonnement".

Dans ce cas où le serveur 16 identifie différents codes associés à un code reçu, le serveur 16 établit une priorité entre ces codes associés de façon à ce qu'un nombre limité de codes soit transmis par le serveur 16 vers le terminal 10a et pour que ces codes soient affichés selon la priorité indiquée.

Pour cela, un ou plusieurs des deuxièmes paramètres précédemment mentionnés sont considérés. Par exemple, si le terminal 10a est en cours d'accès au serveur 15a et qu'un accès en cours est un paramètre prioritaire, le code "Cinéma" est affiché en priorité par rapport au code "Téléphonique" dans la zone d'affichage 22 du terminal 10a.

De façon analogue à la sélection d'une adresse ou de codes dans la base 17 associés à un code transmis par le terminal, des premiers paramètres de sélection permettent de déterminer quels codes doivent être sélectionnés et présentés à l'utilisateur dans la zone 22 d'affichage du terminal 10a lorsque l'utilisateur effectue une saisie au moyen du clavier 22a de son terminal.

Il convient de signaler que, dans une réalisation de l'invention, le premier code affiché dans la zone 22 du terminal 10a est présélectionné comme le code devant être transmis, réduisant ainsi le nombre d'appuis de touches que l'utilisateur du terminal doit effectuer pour sélectionner un code affiché.

A cet effet, des sous-bases, ou dictionnaires, 20ₐ, 20_{b} 20_{c} et 20_{d} de codes sont mémorisés dans le terminal 10a, un dictionnaire de codes comprenant des codes relatifs à, par exemple, des accès réalisés par le terminal ou à un répertoire de l'utilisateur, d'un prestataire de services, d'un opérateur de télécommunications, d'un fournisseur d'accès au réseau ou de l'opérateur du serveur de routage.

Dans cet exemple, le dictionnaire 20ₐ comprend des codes relatifs à un accès en cours, le dictionnaire 20_{b} comprend des codes propres à l'opérateur A, le dictionnaire 20_{c} comprend des codes relatifs à des accès réalisés par le terminal et le dictionnaire 20_{d} comprend des codes relatifs aux favoris du terminal.

Ces dictionnaires sont mis à jour en fonction de leur nature. Par exemple, le dictionnaire relatif aux accès réalisés par le terminal 10a est modifié de façon à comprendre les derniers codes sélectionnés par l'utilisateur et ayant abouti à un accès à un serveur ou à des données.

Ces dictionnaires sont alors utilisés pour déterminer quels codes doivent être affichés suite à une saisie effectuée par l'utilisateur du terminal 10a. A cet effet, lorsqu'une suite d'éléments tels que des chiffres, des lettres ou des symboles sont saisis, les codes pouvant correspondre à la saisie en cours sont déterminés en comparant la suite d'éléments saisis avec des codes d'un ou plusieurs dictionnaires.

Le choix des dictionnaires utilisés est fonction du contexte de la saisie, ce contexte comprenant des paramètres tels qu'un accès en cours, une adresse affichée par le terminal, une balise identifiant un dictionnaire, la localisation géographique du terminal, l'opérateur téléphonique ou le fournisseur d'accès au réseau considéré, des préférences de l'utilisateur, le type de terminal, la langue utilisée, l'historique des sites visités, les sites indiqués en favoris.

Ainsi, en limitant le nombre de dictionnaires utilisés pour déterminer les codes similaires à une saisie, le terminal identifie un nombre limité de codes vis-à-vis d'une saisie, de telle sorte que l'utilisateur n'est pas confronté à un nombre trop important de codes affichés.

Par exemple, on peut considérer que le terminal 10a est en communication avec un serveur fournissant des informations sportives, un dictionnaire propre à ce serveur ayant été chargé dans le terminal 10a, ce dictionnaire comportant un code "mondial" associé, dans le serveur 16 de routage, à l'adresse de données relatives à un championnat sportif.

Par ailleurs, il est possible qu'un code "mondial" soit aussi défini dans le dictionnaire de l'opérateur téléphonique, ce code étant associé à des données relatives à une offre d'abonnement pour un forfait permettant les communications dans un grand nombre de pays.

Toutefois, en considérant le contexte, c'est-à-dire la communication en cours avec le serveur sportif, si l'utilisateur saisit "mond" sur son terminal, le code "mondial" affiché correspondra au code du dictionnaire sportif associé dans le serveur de routage aux données relatives à un championnat mondial de football.

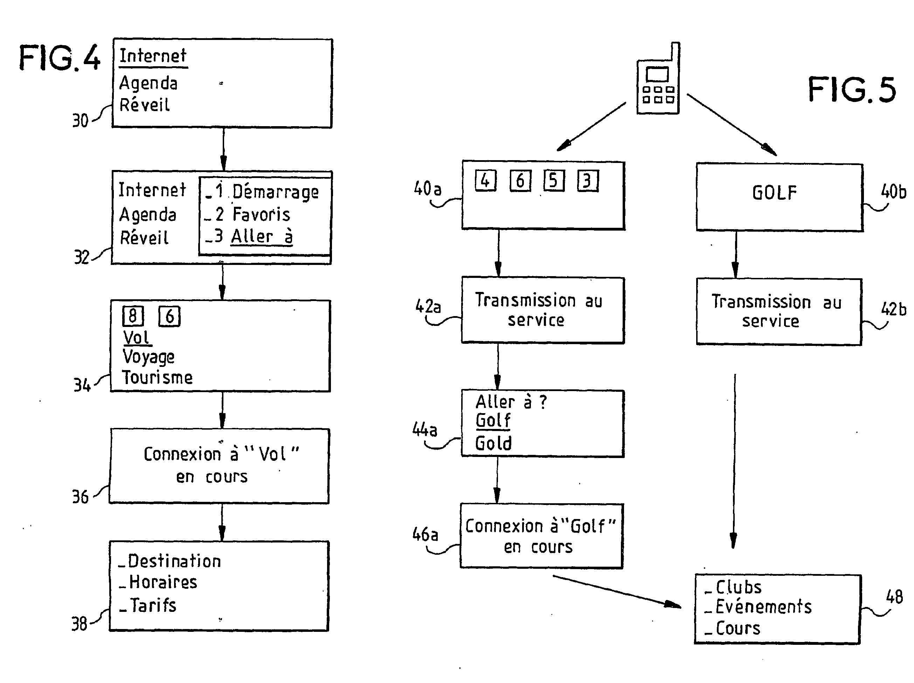

Différents exemples d'utilisation sont décrits ci-dessous à l'aide des figures 4 et 5 **.**

Sur la figure 4 sont représentés les écrans successifs d'un terminal de téléphonie mobile accédant à un serveur du réseau WAP selon un procédé conforme à l'invention.

Suivant une première étape (écran 30), l'utilisateur du terminal sélectionne les outils du téléphone permettant d'accéder au réseau Internet via le réseau WAP.

Lorsque les différents outils de connexion sont affichés, l'utilisateur déclenche (écran 32) un programme de saisie prédicative en sollicitant l'outil "Aller à" qui fait appel aux dictionnaires du terminal (écran 34) .

On rappelle qu'on effectue une prédiction du code en cours de saisie en recherchant dans un ou plusieurs dictionnaires du terminal tous les codes pouvant correspondre aux éléments en cours de saisie, cette correspondance prenant en compte la nature contrainte du clavier du terminal.

Dans cet exemple, l'utilisateur du terminal ayant appuyé sur les touches 8 et 6 pouvant également correspondre aux lettres t/u/v et m/n/o, les moyens de prédiction sélectionnent et affichent les codes "Vol", "Voyage" et "Tourisme" (écran 34) correspondant à la saisie et aux codes les plus fréquemment choisis par l'utilisateur du terminal.

En d'autres termes, grâce à l'utilisation de ces dictionnaires dans la prédiction du code en cours de saisie, il est possible de proposer une liste courte de codes pouvant correspondre au code en cours de saisie.

Lorsque l'utilisateur du terminal sélectionne le code affiché "vol", ce code sélectionné est transmis au serveur de routage (écran 36) qui, identifiant l'adresse du serveur ou des données requises, transmet cette adresse au terminal pour que ce dernier se connecte à cette adresse (écran 38) .

Parallèlement, une mise à jour du dictionnaire propre à l'historique des accès du terminal est effectuée.

Il convient de signaler que, dans cet exemple, les codes du dictionnaire historique sont affichés par ordre de fréquentation tandis que, dans une variante, ces codes sont affichés par ordre alphabétique.

Sur la figure 5 sont représentés deux variantes d'un procédé de communication conforme à l'invention accessibles à partir d'un outil de connexion à Internet.

Suivant une première variante (écran 40a), l'utilisateur du terminal effectue une saisie telle que décrite à la figure 4, c'est-à-dire utilisant des touches communes à différentes lettres dont une combinaison détermine le code recherché par l'utilisateur.

Dans cet exemple, la saisie "4653" entraîne la détermination des combinaisons entre une lettre de chacune des touches 12₄, 12₆, 12₅ et 12₃ (figure 1), le terminal transmettant à un serveur de routage la saisie (écran 42a) pour que ce dernier détermine les codes pouvant correspondre à cette saisie.

Dans cet exemple, deux codes "Golf" et "Gold" sont identifiés par le serveur de routage et transmis au terminal qui affiche (écran 44a) de telle sorte qu'en choisissant le code "Golf", le terminal est mis en communication, via le serveur de routage (écran 46a), avec le serveur dont l'adresse est associée à ce code (écran 48) dans la base du serveur de routage.

Selon une deuxième variante, l'utilisateur du terminal saisit le code correspondant à un serveur (écran 40b). Une telle saisie étant effectuée au moyen du navigateur du terminal, cette saisie est transmise au serveur de routage (écran 42b) et, si la saisie correspond à un code associé à une adresse unique, le serveur de routage transmet au terminal cette adresse unique de façon à ce que ce dernier accède à cette dernière (écran 48).

De façon à limiter la capacité de mémoire requise par le procédé au niveau du terminal, il est préférable de limiter le nombre de codes enregistrés dans le terminal. Dans ce cas, les dictionnaires du terminal mémorisent un nombre de codes inférieur au nombre de codes mémorisés dans le serveur de routage de telle sorte que, lorsque l'utilisateur ne choisit pas un code affiché, la saisie effectuée est transmise au serveur de routage pour que ce dernier identifie un code correspondant à la saisie, selon l'invention.

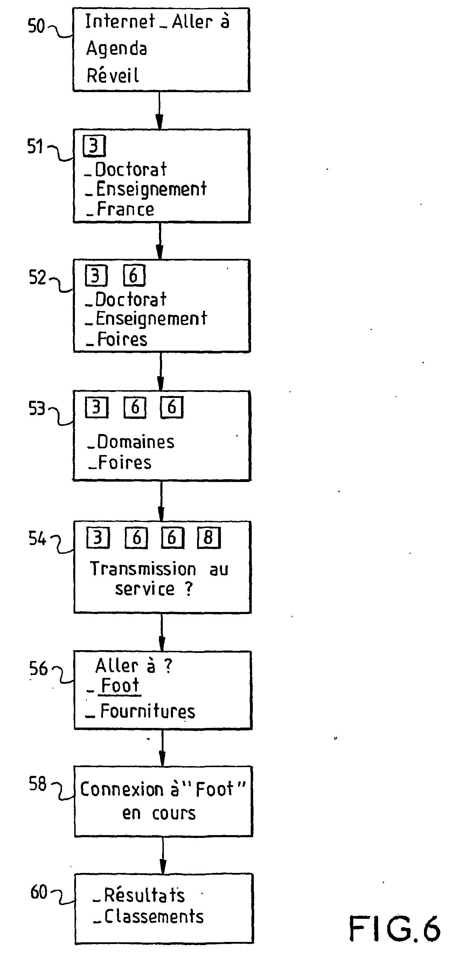

Sur la figure 6 est représentée une telle situation, selon un mode de réalisation de l'invention. Après avoir requis l'utilisation d'un outil de connexion conforme à l'invention (écran 50), l'utilisateur effectue une saisie au cours de laquelle sont affichés les codes mémorisés dans le terminal pouvant correspondre à la saisie effectuée (écrans 51 à 53).

Toutefois, à la fin de la saisie (écran 53), aucun code affiché ne correspond à un code désiré par l'utilisateur. L'outil de connexion propose (écran 54) alors à l'utilisateur de chercher parmi les codes mémorisés dans le serveur de routage.

Lorsque cette proposition est acceptée, le terminal transmet la saisie au serveur de routage (écran 55), de façon analogue à un code, afin que ce dernier identifie des codes pouvant correspondre à la saisie effectuée par l'utilisateur du terminal et transmette ces derniers au terminal pour affichage (écran 56) .

L'utilisateur du terminal sélectionnant (écran 56) un des codes transmis par le serveur, le terminal accède au serveur (écrans 58 et 60) correspondant à l'adresse associée à ce code conformément à l'invention.

La présente invention est susceptible de nombreuses variantes. Ainsi, le serveur 16 de routage peut comprendre des moyens pour effectuer des statistiques, par exemple de fréquentation d'accès à un serveur ou à des données.

Selon une variante, les données transmises par le serveur de routage au terminal sont compressées de manière à limiter les temps de transmission, le terminal comprenant des moyens pour décompresser ces données ou pour traiter ces données sans les décompresser.

Dans une autre variante, un terminal conforme à l'invention comprend des moyens pour afficher les codes, sélectionnés en fonction de premiers paramètres, suivant un ordre propre aux dictionnaires dont sont issus ces codes. Par exemple, les codes issus d'un dictionnaire propre à un accès à un serveur ou à des données sont affichés avant les codes issus du dictionnaire de l'opérateur, les codes issus du dictionnaire historique étant affichés ultérieurement.

Dans une réalisation, le terminal comprend des moyens pour que son utilisateur limite l'accès à des codes au moyen d'un mot de passe, par exemple pour effectuer un contrôle parental.

## Revendications

1. Procédé de communication entre un terminal (10a; 10b) et un serveur (16; 18; 18') d'un réseau (10) de communication, un serveur (15a; 15b; 15r; 16; 18; 18') ou des données d'un serveur étant identifiées par une adresse,ledit procédé comprenant les étapes suivantes:
l'utilisateur du terminal effectuant une saisie, on sélectionne et on affiche (51, 52, 53) des codes mémorisés dans une base du terminal au fur et à mesure de la saisie en considérant des premiers éléments saisis avec des premiers éléments de codes de la base, lesdits codes étant sélectionnés en fonction de premiers paramètres afin que l'utilisateur choisisse un code,
lorsque à la fin de la saisie aucun code affiché ne correspond à un code désiré par l'utilisateur, on propose (54) à l'utilisateur de chercher parmi les codes mémorisés dans un serveur de routage (16) puis, lorsque cette proposition est acceptée, le terminal transmet la saisie au serveur de routage (16), afin que ce dernier identifie des codes pouvant correspondre à la saisie effectuée par l'utilisateur du terminal et on transmet ces codes au terminal pour affichage, l'utilisateur du terminal sélectionnant (56) un des codes transmis par le serveur,
on transmet le code choisi au serveur (16; 18; 18') de routage qui identifie, en fonction de deuxièmes paramètres, une adresse associée au code choisi dont la taille est supérieure à la taille du code choisi et mémorisée dans une base(17; 19; 19') du serveur (16; 18; 18'), et
on transmet l'adresse identifiée au terminal qui accède (58, 60) automatiquement à l'adresse identifiée.

2. Procédé selon la revendication 1, **caractérisé en ce qu'**on transmet, à partir du serveur (16; 18; 18') de routage, une commande modifiant la base de codes du terminal et/ou modifiant une adresse du serveur de routage mémorisée par le terminal pour transmettre un code au serveur de routage et qu'on modifie la base de codes du terminal en effectuant au moins une des opérations suivantes: la mémorisation d'un nouveau code, l'élimination d'un code, la création, la modification ou la suppression d'un groupe ou dictionnaire de codes, l'attribution d'une priorité d'affichage entre des codes, par exemple en fonction du dictionnaire dont est issu ce code.

3. Procédé selon la revendication 1 ou 2, **caractérisé en ce qu'**on transmet la commande de modification lorsque le serveur communique une adresse au terminal.

4. Procédé selon l'une des revendications précédentes, **caractérisé en ce qu'**on considère la similitude entre la saisie et un code mémorisé comme un premier paramètre tel que les codes affichés sont les codes les plus similaires à la saisie.

5. Procédé selon la revendication 4, **caractérisé en ce que**, pour déterminer la similitude entre la saisie et un code, on attribue un coût pour chaque correction d'un élément de la saisie permettant d'obtenir un élément du code, par exemple en substituant ou en supprimant un élément de la saisie ou en insérant un élément dans la saisie, la similitude entre une saisie et un code étant d'autant plus élevée que la somme des coûts pour obtenir un code en corrigeant une saisie est faible.

6. Procédé selon l'une des revendications précédents, **caractérisé en ce qu'**on considère la saisie comme un code qui est transmis au serveur de routage.

7. Procédé selon l'une des revendications précédents, **caractérisé en ce qu'**on groupe les codes du terminal en dictionnaires, chaque dictionnaire étant propre à une catégorie de codes telle que des codes relatifs à des accès réalisés par le terminal ou à un répertoire de l'utilisateur, d'un prestataire de services, d'un opérateur de télécommunications, d'un fournisseur d'accès au réseau ou d'un opérateur du serveur de routage.

8. Procédé selon la revendication 7, **caractérisé en ce qu'**on considère le contexte de la saisie comme un premier paramètre de sélection fixant une priorité de sélection entre les codes issus de différents dictionnaires, ce contexte étant relatif à au moins un des paramètres suivants: des données affichées par le terminal, un accès en cours, une communication en cours, une localisation géographique du terminal, un opérateur téléphonique transmettant les communications, un fournisseur d'accès au réseau, un historique des accès réalisés, des sites indiqués en favoris, la nature du terminal, une langue de fonctionnement du terminal.

9. Procédé selon la revendication 8, **caractérisé en ce qu'**on transmet au moins un paramètre du contexte de la saisie au serveur de routage lors de la transmission d'un code.

10. Procédé selon la revendication 9, **caractérisé en ce que**, les adresses ou des codes associés à des codes étant groupées par dictionnaires propres à une catégorie d'adresse, on utilise un paramètre du contexte de la saisie et/ou un identifiant de l'utilisateur comme un deuxième paramètre de sélection attribuant une priorité à une adresse issue d'un premier dictionnaire vis-à-vis d'une adresse issue d'un deuxième dictionnaire ou à un code issu d'un premier dictionnaire vis-à-vis d'un code issu d'un deuxième dictionnaire.

11. Procédé selon l'une des revendications précédentes **caractérisé en ce qu'**on utilise des serveurs intermédiaires comportant une base d'adresse issue de la base du serveur de routage de façon à recevoir le code émis par le terminal pour transmettre à ce terminal une adresse ou des codes, pour transmettre le code reçu au serveur de routage ou pour transmettre des commandes modifiant la base de codes du terminal.

12. Terminal de communication accédant à des serveurs ou à des données de ces serveurs via un réseau de communication au moyen d'une adresse conforme à un protocole de communication **caractérisé en ce qu'**il comprend des moyens pour:
Sélectionner et Afficher (51, 52, 53) des codes mémorisés dans une base du terminal au fur et à mesure d'une saisie par l'utilisateur du terminal (10a, 10b) en considérant des premiers éléments saisis avec des premiers éléments de codes de la base, lesdits codes étant sélectionnés en fonction de premiers paramètres lorsque l'utilisateur du terminal (10s, 10b) effectue une saisie afin que cet utilisateur choisisse un code
Proposer à l'utilisateur, lorsqu'à la fin de la saisie aucun code affiché ne correspond à un code désiré par l'utilisateur, de chercher parmi les codes mémorisés dans un serveur de routage (16),puis, lorsque cette proposition est acceptée, transmettre la saisie au serveur de routage, recevoir des codes identifiés par ce dernier pouvant correspondre à la saisie effectuée par l'utilisateur du terminal et afficher les codes identifiés et transmis par le serveur, afin que l'utilisateur du terminal sélectionne (56) un des codes transmis par le serveur,
Transmettre le code choisi au serveur (16) de routage et recevoir de ce serveur de routage une adresse dont la taille est supérieure à la taille du code choisi et accéder automatiquement à cette dernière.

13. Terminal selon la revendication 12, **caractérisé en ce qu'**il comprend des moyens pour recevoir du serveur de routage une commande modifiant sa base de codes et/ou modifiant une adresse du serveur et pour modifier sa base de codes en effectuant au moins une des opérations suivantes: la mémorisation d'un nouveau code, l'élimination d'un code, la création, la modification ou la suppression d'un groupe ou dictionnaire de codes, l'attribution d'une priorité d'affichage entre des codes, par exemple en fonction du dictionnaire dont est issu ce code.

14. Terminal selon l'une des revendications 12 à 13, **caractérisé en ce qu'**il comprend des moyens pour considérer la similitude entre la saisie et un code mémorisé comme un premier paramètre de sélection des codes affichés.

15. Terminal selon la revendication 14, **caractérisé en ce qu'**il comprend des moyens pour déterminer la similitude entre la saisie et un code en attribuant un coût pour chaque correction d'un élément de la saisie permettant d'obtenir un élément du code, par exemple en substituant ou en supprimant un élément de la saisie ou en insérant un élément dans la saisie, la similitude entre une saisie et un code étant alors d'autant plus élevée que la somme des coûts pour obtenir un code en corrigeant une saisie est faible.

16. Terminal selon l'une des revendications 12 à 15, **caractérisé en ce qu'**il comprend des moyens pour diviser la base de codes en sous bases, ou dictionnaires propres à une catégorie de codes telle que des codes relatifs aux accès réalisés par le terminal ou à un répertoire de l'utilisateur, d'un prestataire de services, d'un opérateur de télécommunications, d'un fournisseur d'accès au réseau ou d'un opérateur du serveur de routage.

17. Terminal selon la revendication 16, **caractérisé en ce qu'**il comprend des moyens pour considérer le contexte de la saisie comme un premier paramètre de sélection fixant une priorité de sélection entre les codes de différents dictionnaires, ce contexte étant relatif à au moins un des paramètres suivants: des données affichées par le terminal, un accès en cours, une communication en cours, une localisation géographique du terminal, un opérateur téléphonique transmettant les communications, un fournisseur d'accès au réseau, un historique des sites visités, des sites indiqués en favoris, un fabriquant du terminal, une langue de saisie.

## Claims

1. A method for communication between a terminal (10a; 10b) and a server (16; 18; 18') on a communications network (10), a server (15a; 15b; 15r; 18; 18') or server data being identified by an address, the said method including the following stages:
when the terminal user makes an input, codes stored in a database in the terminal are selected and displayed (51, 52, 53) as they are input, considering the first elements input with the first elements of the database codes, the said codes being selected according to primary parameters in order for the user to choose a code,
when at the end of the input no displayed code corresponds to a code desired by the user, the user is invited (54) to look among the codes stored in a router server (16); then, if this suggestion is accepted, the terminal transmits the input data to the router server (16) so that the router server can identify codes that could correspond to the user's input from the terminal; these codes are transmitted to the terminal for display, with the terminal user selecting (56) one of the codes transmitted by the server,
the chosen code is transmitted to the router server (16; 18; 18') which, depending on second parameters, identifies an address associated with the chosen code, whose size is greater than the size of the chosen code and stored in a database (17; 19; 19') in the server (16; 18; 18'), and
the identified address is transmitted to the terminal which automatically accesses (58, 60) the identified address.

2. A method according to claim 1, whereby, from the router server (16; 18; 18'), a command is transmitted modifying the terminal database and/or modifying a router server address stored by the terminal to transmit a code to the router server, and whereby the terminal code database is modified by carrying out at least one of the following operations: storage of a new code, creation, modification or deletion of a group or dictionary of codes, depending, for example, on the dictionary from which the codes originated.

3. A method according to claims 1 or 2, whereby the modification command is transmitted when the server communicates an address to the terminal.

4. A method according to one of the preceding claims, whereby the similarity between the data input and a stored code is assumed to be a primary parameter such that the codes displayed are codes the most like the data input.

5. A method according to claim 4 whereby, to determine the similarity between the input data and a code, a cost is assigned to each correction of an element of the data input enabling an element of the code to be obtained, for example, by substituting or deleting an element of the data input or inserting an element into the data; the greater the similarity between an input and a code, the lower the sum of the costs in obtaining a code by correcting an input.

6. A method according to one of the preceding claims, whereby the data input is considered to be a code transmitted to the router server.

7. A method according to one of the preceding claims whereby the terminal codes are grouped into dictionaries, each dictionary being specific to a category of codes such as the codes related to access made by the terminal or to a user list, a service provider, a telecommunications operator, an internet service provider or a router server operator.

8. A method according to claim 7 whereby the context of the input data is assumed to be a primary selection parameter setting a selection priority between the codes from the various dictionaries, this context being related to at least one of the following parameters: data displayed by the terminal, connection in progress, communication in progress, geographic location of the terminal, a telephone operator sending communications, an internet service provider, a connection history, sites shown under favourites, the type of terminal or the operating language of the terminal.

9. A method according to claim 8, whereby at least one context parameter of the input data is transmitted to the router server during transmission of a code.

10. A method according to claim 9 whereby the addresses or codes associated with codes being grouped by dictionaries specific to an address category, a data input context parameter is used and/or a user identifier as a second selection parameter assigning priority to an address from a primary dictionary with respect to an address from a second dictionary or to a code from a primary dictionary with respect to a code from a second dictionary.

11. A method according to one of the preceding claims whereby intermediate servers are used which incorporate a database of addresses from the router server database so as to receive the code transmitted by the terminal to transmit an address or codes to this terminal, to transmit the code received at the router server or to transmit commands modifying the terminal codes database.

12. A communications terminal with access to servers or to data from these servers via a communications network by means of an address conforming to a communications protocol whereby it includes means to:
Select and Display (51, 52, 53) codes stored in a terminal database gradually from the data input by the terminal (10a, 10b) user, considering the first elements input with the first elements of the database codes, the said codes being selected depending on the primary parameters in order for this user to choose a code.
Suggest to the user when, at the end of the data input no code displayed corresponds to a code desired by the user, to look among the codes stored in a router server (16); then, if this suggestion is accepted, to transmit the data input to the router server and receive the codes identified by the router server corresponding to the data input by the terminal user and to display the codes identified and transmitted by the server so that the terminal user can select (56) one of the codes transmitted by the server.
Transmit the chosen code to the router server (16) and to receive from this router server an address whose size is greater than that of the chosen code, and to access this address automatically.

13. A terminal according to claim 12, whereby it incorporates means to receive from the router server a command modifying the codes database and/or modifying a server address, and to modify its codes database by carrying out at least one of the following operations: storage of a new code, elimination of a code, creation, modification or deletion of a group or dictionary of codes, assignment of a display priority between codes depending, for example, on the dictionary from which the codes originated.

14. A terminal according to one of claims 12 to 13, whereby it incorporates means for considering the similarity between the data input and a stored code as a primary selection parameter for the displayed codes.

15. A terminal according to claim 14 whereby it incorporates means to determine the similarity between input data and a code while assigning a cost to each correction of an element of the data input enabling an element of the code to be obtained, for example by substituting or deleting an element of the data input or by inserting an element into the data; the greater the similarity between an input and a code, the lower the sum of the costs in obtaining a code by correcting an input.

16. A terminal according to claims 12 to 15, whereby it incorporates means to divide the database of codes into sub databases, or dictionaries specific to a category of codes such as codes relating to connections made by the terminal or to a list belonging to the user, a service provider, a telecommunications operator, an internet service provider or a router server operator.

17. A terminal according to claim 16 whereby it incorporates means for considering the context of the data input as a primary selection parameter setting a selection priority between the codes of different dictionaries, this context being related to at least one of the following parameters: data displayed by the terminal, connection in progress, communication in progress, geographic location of the terminal, a telephone operator sending communications, an internet service provider, a history of sites visited, sites shown under favourites, a terminal manufacturer or the data input language.

## Patentansprüche

1. Kommunikationsverfahren zwischen einem Endgerät (10a; 10b) und einem Server (16; 18; 18') eines Kommunikationsnetzwerks (10), wobei ein Server (15a; 15b; 15r; 16; 18; 18') oder Daten eines Servers durch eine Adresse identifiziert werden und das genannte Verfahren dabei die folgenden Schritte umfasst:
wenn der Benutzer des Endgeräts eine Eingabe vornimmt, werden in einer Datenbank des Endgeräts gespeicherte Codes je nach Eingabe selektiert und angezeigt (51, 52, 53), indem erste eingegebene Elemente mit ersten Elementen der Codes der Datenbank verglichen werden, wobei die genannten Codes in Abhängigkeit von ersten Parametern selektiert werden hinsichtlich der Auswahl eines Codes durch den Benutzer,
wenn am Ende der Eingabe keiner der angezeigten Codes einem von dem Benutzer erwünschten Code entspricht, wird dem Benutzer vorgeschlagen (54), unter den in einem Routingserver (16) abgespeicherten Codes zu suchen; dann, wenn dieser Vorschlag akzeptiert wird, überträgt das Endgerät die Eingabe zum Routingserver (16), damit dieser Letztere Codes identifiziert, die der durch den Benutzer des Endgeräts vorgenommenen Eingabe entsprechen können, und diese Codes werden dann zur Anzeige zu dem Endgerät übertragen, wobei der Benutzer des Endgerät einen der durch den Server übertragenen Codes auswählt (56),
der ausgewählte Code wird zum Routingserver (16; 18; 18') übertragen, der in Abhängigkeit von zweiten Parametern eine mit dem ausgewählten Code verknüpfte Adresse identifiziert, deren Größe größer ist als die Größe des ausgewählten und in einer Datenbank (17; 19; 19') des Servers (16; 18; 18') abgespeicherten Codes, und
die identifizierte Adresse wird zum Endgerät übertragen, das automatisch auf die identifizierte Adresse zugreift (58, 60).

2. Verfahren nach Anspruch 1, **dadurch gekennzeichnet, dass** man, ausgehend vom Routingserver (16; 18; 18'), einen Befehl überträgt, der die Codedatenbank des Endgeräts ändert und/oder eine Adresse des Routingservers - gespeichert durch das Endgerät, um einen Code zum Routingserver zu übertragen - ändert, und man die Codedatenbank des Endgeräts ändert, indem man mindestens eine der folgenden Operationen durchführt: das Einspeichern eines neuen Codes, das Löschen eines Codes, das Erzeugen, Ändern oder Löschen einer Codegruppe oder -tabelle, das Zuteilen einer Anzeigepriorität zwischen den Codes, zum Beispiel in Abhängigkeit von der Codetabelle, aus der dieser Code stammt.

3. Verfahren nach Anspruch 1 oder 2, **dadurch gekennzeichnet, dass** man den Änderungsbefehl überträgt, wenn der Server dem Endgerät eine Adresse mitteilt.

4. Verfahren nach einem der vorhergehenden Ansprüche, **dadurch gekennzeichnet, dass** man die Ähnlichkeit zwischen der Eingabe und einem abgespeicherten Code als einen ersten Parameter betrachtet, derart dass die angezeigten Codes die der Eingabe ähnlichsten Codes sind.

5. Verfahren nach Anspruch 4, **dadurch gekennzeichnet, dass** man, um die Ähnlichkeit zwischen der Eingabe und einem Code zu bestimmen, jeder Korrektur eines Elements der Eingabe zur Erlangung eines Elements des Codes - indem man zum Beispiel ein Element der Eingabe ersetzt oder löscht oder ein Element in die Eingabe einfügt -, eine Kostengröße zuordnet, wobei die Ähnlichkeit zwischen einer Eingabe und einem Code um so größer ist, je kleiner die Summe der Kosten zur Erlangung eines Codes durch Korrigieren einer Eingabe ist.

6. Verfahren nach einem der vorhergehenden Ansprüche, **dadurch gekennzeichnet, dass** man die Eingabe als einen Code betrachtet, der zum Routingserver übertragen wird.

7. Verfahren nach einem der vorhergehenden Ansprüche, **dadurch gekennzeichnet, dass** man die Codes des Endgeräts zu Tabellen gruppiert, wobei jede Tabelle typisch ist für eine Codekategorie, zum Beispiel für Codes, die durch das Endgerät realisierte Zugriffe oder ein Verzeichnis des Benutzers, eines Dienstleisters, eines Telekommunikationsoperators, eines Netzbetreibers oder eines Routingserver-Operators betreffen.

8. Verfahren nach Anspruch 7, **dadurch gekennzeichnet, dass** man den Kontext der Eingabe als einen ersten Selektionsparameter berücksichtigt, der eine Selektionspriorität zwischen den aus verschiedenen Tabellen stammenden Codes festlegt, wobei dieser Kontext sich bezieht auf wenigstens einen der folgenden Parameter: durch das Endgerät angezeigte Daten, einen laufenden Zugriff, eine laufende Kommunikation, eine geographische Lokalisierung des Endgeräts, einen die Kommunikationen übertragenden Telefonbetreiber, einen Netzzugangsdiensterbringer, eine Historie der realisierten Zugriffe, als Favoriten angezeigte Internetseiten, die Art des Endgeräts, eine Betriebssprache des Endgeräts.

9. Verfahren nach Anspruch 8, **dadurch gekennzeichnet, dass** man bei der Übertragung eines Codes wenigstens einen Kontextparameter der Eingabe zum Routingserver überträgt.

10. Verfahren nach Anspruch 9, **dadurch gekennzeichnet** - wobei Adressen oder mit Adressen verknüpfte Codes durch für eine Adressenkategorie typische Tabellen gruppiert werden - , dass man einen Eingabekontextparameter und/oder einen Benutzeridentifikator als einen zweiten Selektionsparameter benutzt, der einer aus einer ersten Tabelle stammenden Adresse gegenüber einer aus einer zweiten Tabelle stammenden Adresse oder einem aus einer ersten Tabelle stammenden Code gegenüber einem aus einer zweiten Tabelle stammenden Code eine Priorität zuteilt.

11. Verfahren nach einem der vorhergehenden Ansprüche, **dadurch gekennzeichnet, dass** man Intermediärserver mit einer aus der Datenbank des Routingservers stammenden Adressdatenbank benutzt, um den durch das Endgerät gesendeten Code, der dazu dient, diesem Endgerät eine Adresse oder Codes zu übertragen, zu empfangen, um den empfangenen Code zum Routingserver zu übertragen oder um Befehle zur Änderung der Datenbank des Endgeräts zu übertragen.

12. Kommunikations-Endgerät mit Zugriff auf Server oder Daten dieser Server über ein Kommunikationsnetzwerk mit Hilfe einer einem Kommunikationsprotokoll entsprechenden Adresse, **dadurch gekennzeichnet, dass** es Einrichtungen umfasst:
um in einer Datenbank des Endgeräts gespeicherte Codes je nach Eingabe durch den Benutzer des Endgeräts (10a, 10b) zu selektieren und anzuzeigen (51, 52, 53), indem erste eingegebene Elemente mit ersten Elementen der Codes der Datenbank verglichen werden, wobei die genannten Codes in Abhängigkeit von ersten Parametern selektiert werden, wenn der Benutzer des Endgeräts (10a, 10b) eine Eingabe hinsichtlich der Auswahl eines Codes durch diesen Benutzer vornimmt,
um - wenn am Ende der Eingabe kein angezeigter Code einem durch den Benutzer erwünschten Code entspricht -, dem Benutzer vorzuschlagen, unter den in einem Routingserver (16) abgespeicherten Codes zu suchen und dann, wenn dieser Vorschlag akzeptiert wird, die Eingabe zum Routingserver zu übertragen, durch diesen Letzteren identifizierte Codes, die der durch den Benutzer des Endgeräts durchgeführten Eingabe entsprechen können, zu empfangen und die durch den Server identifizierten und übertragenen Codes anzuzeigen hinsichtlich der Auswahl (56) eines der durch den Server übertragenen Codes durch den Benutzer des Endgeräts,
um den ausgewählten Code zum Routingserver (16) zu übertragen und von diesem Routingserver eine Adresse zu erhalten, deren Größe die Größe des ausgewählten Codes überschreitet, und um automatisch auf diese Letztere zuzugreifen.

13. Endgerät nach Anspruch 12, **dadurch gekennzeichnet, dass** es Einrichtungen umfasst, um von dem Routingserver einen Befehl zu empfangen, fähig seine Code-Datenbank zu ändern und/oder eine Adresse des Servers zu ändern und, um seine Code-Datenbank zu ändern, wenigstens eine der folgenden Operationen durchzuführen: das Einspeichern eines neuen Codes, das Löschen eines Codes, das Erzeugen, Ändern oder Löschen einer Codegruppe oder -tabelle, das Zuteilen einer Anzeigepriorität zwischen Codes, zum Beispiel in Abhängigkeit von der Tabelle, aus der dieser Code stammt.

14. Endgerät nach einem der Ansprüche 12 bis 13, **dadurch gekennzeichnet, dass es** Einrichtungen umfasst, um die Ähnlichkeit zwischen der Eingabe und einem abgespeicherten Code als einen ersten Auswahlparameter der angezeigten Codes zu berücksichtigen.

15. Endgerät nach Anspruch 14, **dadurch gekennzeichnet, dass** es Einrichtungen umfasst, um die Ähnlichkeit zwischen der Eingabe und einem Code zu bestimmen, indem man jeder Korrektur eines Elements der Eingabe, die ermöglicht, ein Element des Codes zu erhalten - indem man zum Beispiel ein Element der Eingabe ersetzt oder löscht oder ein Element in die Eingabe einfügt -, eine Kostengröße zuordnet, wobei die Ähnlichkeit zwischen einer Eingabe und einem Code dann um so größer ist, je kleiner die Summe der Kosten für das Erlangen eines Codes durch Korrigieren einer Eingabe ist.

16. Endgerät nach einem der Ansprüche 12 bis 15, **dadurch gekennzeichnet, dass** es Einrichtungen zur Unterteilung der Code-Datenbank in Unterbanken oder -tabellen umfasst, die typisch sind für eine Code-Kategorie, zum Beispiel für Codes die die durch das Endgerät realisierten Zugriffen oder ein Verzeichnis des Benutzers, eines Dienstleisters, eines Telekommunikationsoperators, eines Netzbetreibers oder eines Routingserver-Operators betreffen.

17. Endgerät nach Anspruch 16, **dadurch gekennzeichnet, dass** es Einrichtungen umfasst, um den Kontext der Eingabe als einen ersten Selektionsparameter zu berücksichtigen, der eine Selektionspriorität zwischen den aus verschiedenen Tabellen stammenden Codes festlegt, wobei dieser Kontext sich bezieht auf wenigstens einen der folgenden Parameter: durch das Endgerät angezeigte Daten, einen laufenden Zugriff, eine laufende Kommunikation, eine geographische Lokalisierung des Endgeräts, einen die Kommunikationen übertragenden Telefonbetreiber, einen Netzzugangsdiensterbringer, eine Historie der besuchten Internetseiten, als Favoriten angezeigte Seiten, einen Hersteller des Endgeräts, eine Eingabesprache.
